# EUROPÄISCHE PATENTSCHRIFT

(11) **EP 2 442 662 B1**
(45) Veröffentlichungstag und Bekanntmachung des Hinweises auf die Patenterteilung: **21.11.2012**
(21) Anmeldenummer: 11718322.8
(22) Anmeldetag: 19.04.2011
(51) Int. Cl.: A22C 25/16

(54) **VORRICHTUNG UND VERFAHREN ZUM FILETIEREN VON GEKÖPFTEN UND ENTWEIDETEN FISCHEN**
APPARATUS AND METHOD FOR FILLETING DEHEADED AND GUTTED FISH
DISPOSITIF ET PROCÉDÉ DE FILETAGE DE POISSONS ÉTÊTÉS ET ÉVISCÉRÉS

(30) Priorität: 21.04.2010 DE 102010018057
(43) Veröffentlichungstag der Anmeldung: 25.04.2012
(73) Patentinhaber: Nordischer Maschinenbau Rud. Baader GmbH + Co. KG, 23560 Lübeck (DE)
(72) Erfinder: JÜRS, Michael, 23683 Haffkrug (DE); FINKE, Hans, 23552 Lübeck (DE); BRANDT, Manfred, 23564 Lübeck (DE)
(74) Vertreter: Stork Bamberger
(86) Internationale Anmeldenummer: PCT/EP2011/056250
(87) Internationale Veröffentlichungsnummer: WO 2011/131680

(56) Entgegenhaltungen:
- US-A- 2 917 772
- US-B1- 6 280 313
- US-B1- 6 322 437

## Beschreibung

Die Erfindung betrifft eine Vorrichtung zum Filetieren von geköpften und entweideten Fischen, umfassend ein Schneidaggregat zum Filetieren der Fische, wobei das Schneidaggregat mindestens ein Kreismesserpaar aufweist, einen endlos umlaufenden Transportförderer mit mindestens einem sattelförmigen Stützkörper zum Aufnehmen der Fische und Fördern derselben durch das Schneidaggregat mit dem Schwanz voraus, wobei jeder Stützkörper eine Stützkante zur Herstellung einer formschlüssigen Verbindung zur Mittelgräte des zu bearbeitenden Fisches aufweist, sowie eine Einrichtung zum Zentrieren der Mittelgräte in Bezug auf den Stützkörper.

Des Weiteren betrifft die Erfindung ein Verfahren zum Filetieren von geköpften und entweideten Fischen, mit den Schritten: Transportieren eines mit seiner Mittelgräte auf einer Stützkante eines Stützorgans mit dem Rücken nach oben aufliegenden Fisches Schwanz voraus durch eine Vorrichtung zum Filetieren von Fischen, wobei während des Transports die dorsalen Rückengräten mittels eines Kreismesserpaares freigeschnitten werden.

Solche Vorrichtungen und Verfahren werden in der Fisch verarbeitenden Industrie eingesetzt, um die Filets vom Grätenskelett des Fisches zu trennen. Genauer werden die ventralen Bauchspeichen und/oder die dorsalen Rückenspeichen freigeschnitten. Zum Freischneiden der Speichen ist es erforderlich, dass die Fische, die üblicherweise Schwanz voraus und mit dem Rücken nach oben transportiert werden, zentriert dem Schneidapparat zugeführt werden. Dazu sind die geköpften und entweideten Fische auf Stützkörpern, den so genannten Transportsätteln, aufgesattelt. Damit die Fische auf den Transportsätteln halten, ist die Oberseite der Transportsättel mit einer Stützkante versehen. Üblicherweise besitzen die Transportsättel auf ihrer Oberseite Zähne, die sich in die Mittelgräte der Fische verhaken und somit eine formschlüssige Verbindung bilden. Für einige Fischsorten ist es ausreichend, eine Reihe von Zähnen vorzusehen. Insbesondere salmonide Fischsorten weisen eine Mittelgräte, bei der im Bereich der Bauchhöhle die Rippenansätze über die gesamte Länge der Mittelgräte gleichmäßig in einem engen Winkel aus der Mittelgräte ragen, so dass sich die Zähne mittig unter die Mittelgräte verhaken. Die eng von der Mittelgräte abstehenden Rippenansätze bilden quasi eine Führung, so dass die Mittelgräte stets mittig auf der Stützkante des Stützkörpers aufliegt. Mit anderen Worten verhindern die Rippenansätze ein Abrutschen der Mittelgräte von dem Stützkörper. Mittels der Einrichtung zum Zentrieren, die üblicherweise ein Klappenpaar umfasst, das sich synchronisiert aufeinander zu und voneinander weg bewegen kann, kann der Fisch dann für den Schneidprozess feinzentriert werden.

Andere Fischsorten, insbesondere die Weißfischsorten, weisen eine Mittelgräte auf, die eine sich über die Länge verändernde Gestalt aufweist. Anders ausgedrückt verändert sich im Bereich der Bauchhöhle die Stellung der Rippenansätze zur Mittelgräte vom schwanzseitigen Ende der Bauchhöhle in Richtung des kopfseitigen Endes der Bauchhöhle. Während die Rippenansätze am schwanzseitigen Ende der Bauchhöhle eine ähnliche Ausrichtung zur Mittelgräte haben, wie die salmoniden Fischsorten, nämlich in einem engen Winkel zur Mittelgräte, ändert sich diese Stellung in Richtung Kopf, derart, dass die Rippenansätze im Bereich des kopfseitigen Endes der Bauchhöhle in einem weiten Winkeln, nämlich nahezu horizontal aus der Mittelgräte ragen. Diese Gestalt der Mittelgräte bzw. genauer die Ausrichtung der Rippenansätze führt dazu, dass sich die Mittelgräte beim Aufsatteln auf den Transportsattel zu einer der beiden Seiten der Zahnreihe neigt, da die Stütz- bzw. Führungsfunktion der eng anliegenden Rippenansätze fehlt. Mit anderen Worten kippt die Mittelgräte im Bereich der seitlich aus der Mittelgräte ragenden Rippenansätze von der Zahnreihe, so dass eine Feinzentrierung durch die Einrichtung zum Zentrieren erschwert ist. Die Folge sind Fehlschnitte am Filet. Aus diesem Grunde wurden für solche Fischsorten Transportsättel eingesetzt, die eine doppelte Zahnreihe aufweisen.

Ein solcher Transportsattel ist z.B. aus der DE 34 03 771 C1 bekannt. Dadurch lässt sich die Mittelgräte derart aufsatteln, dass die Mittelgräte mittig zwischen den beiden Zahnreihen liegt. Allerdings weist ein Transportsattel mit zwei Zahnreihen erhebliche Nachteile auf. Durch die erforderliche Dicke eines solchen Transportsattels quer zur Transportrichtung T bildet ein solcher Transportsattel eine Störkontur für diverse Aggregate. Ein weiterer Nachteil besteht darin, dass das Schneidaggregat bzw. die Kreismesser nicht eng genug an das Grätenskelett schneiden können, so dass die nicht geschnittenen Bereiche des Filets vom Grätenskelett gerissen werden.

Das Dokument US 6 322 437 B1 offenbart eine Vorrichtung zum Filetieren von geköpften und entweideten Fischen, umfassend ein Schneidaggregat zum Filetieren der Fische, wobei das Schneidaggregat mindestens ein Kreismesserpaar aufweist, einen endlos umlaufenden Transportförderer mit mindestens einem sattelförmigen Stützkörper zum Aufnehmen der Fische und Fördern derselben durch das Schneidaggregat mit dem Schwanz voraus, wobei jeder Stützkörper eine Stützkante zur Herstellung einer formschlüssigen Verbindung zur Mittelgräte des zu bearbeitenden Fisches aufweist, sowie eine Einrichtung zum Zentrieren der Mittelgräte in Bezug auf den Stützkörper.

Der Erfindung liegt somit die Aufgabe zugrunde, eine einfache und kostengünstige Vorrichtung zum Filetieren von Fisch zu schaffen, die eine verbesserte Zentrierung der Fische ermöglicht.

Diese Aufgabe wird durch eine Vorrichtung mit den eingangs genannten Merkmalen dadurch gelöst, dass ein Mittel zum Abheben der Mittelgräte der Fische von der Stützkante des Stützkörpers vorgesehen ist, das im Bereich der Einrichtung zum Zentrieren der Mittelgräte angeordnet ist. Durch das erfindungsgemäße Mittel zum Abheben kann der Fischrumpf bzw. genauer die Mittelgräte aktiv oder passiv ganz oder teilweise außer Eingriff mit dem Stützkörper gebracht werden, so dass die Einrichtung zum Zentrieren die Mittelgräte eines Fisches unabhängig von deren Gestalt mittig zum Stützkörper zentrieren kann. Anders ausgedrückt wird durch das Abheben der Formschluss zwischen dem Stützkörper und der Mittelgräte mindestens partiell gelöst, so dass die Mittelgräte zumindest in dem Bereich des Abhebens frei bewegbar ist. Insbesondere können jetzt auch Weißfischsorten, deren Mittelgräten bisher den Einsatz eines doppelreihigen Stützkörpers notwendig machten, mit einem einreihigen Stützkörper bearbeitet werden. Die Schnittqualität und die Ausbeute der Filetschnitte sind mit der erfindungsgemäßen Ausbildung deutlich verbessert. Auch können die - durch die fehlende Zentrierung bedingten - Fehlschnitte reduziert bzw. ganz vermieden werden, da alle auf einem Transportsattel positionierbaren Fischsorten unmittelbar vor dem Trennprozess feinzentriert werden können.

Eine zweckmäßige Weiterbildung der Erfindung zeichnet sich dadurch aus, dass das Schneidaggregat ein unteres Kreismesserpaar zum Freischneiden der ventralen Bauchgräten und ein oberes Kreismesserpaar zum Freischneiden der dorsalen Rückengräten umfasst, wobei das obere Kreismesserpaar in Transportrichtung T der Fische Schwanz voraus hinter dem unteren Kreismesserpaar angeordnet ist und das Mittel zum Abheben der Mittelgräte ein Mittel zum Anheben der Mittelgräte ist und sich zu beiden Seiten des unteren Kreismesserpaares in Transportrichtung T von dem unteren Kreismesserpaar bis zum oberen Kreismesserpaar erstreckt. Durch die Ausbildung des Mittels zum Abheben als Mittel zum Anheben kann die Mittelgräte aktiv und gezielt von den Zähnen des Stützkörpers gelöst werden, um den Zentriervorgang einzuleiten.

Vorteilhafterweise umfasst das Mittel zum Abheben der Mittelgräte zwei Führungselemente, die jeweils eine Erhöhung zur Bildung einer unebenen Führungsfläche aufweisen, wobei die Erhöhung in Richtung der Einrichtung zum Zentrieren der Mittelgräte über die Stützkante des Stützkörpers hinaus ragt. Diese Ausführung ist mechanisch besonders einfach und effektiv, da die auf dem Stützkörper platzierten Fische der Kontur der Führungselemente bzw. deren Führungsflächen zwangsläufig folgen. Durch die paarweise Anordnung der Führungselemente, nämlich jeweils ein Führungselement auf jeder Seite des Stützkörpers bzw. des Kreismesserpaares, ist eine gleichmäßige und synchrone Führung des Fisches und insbesondere der Mittelgräte des Fisches gewährleistet.

Eine weitere bevorzugte Weiterbildung der Erfindung ist dadurch gekennzeichnet, dass das Mittel zum Abheben der Mittelgräte zwei Führungselemente umfasst, die jeweils in Transportrichtung T zur Bildung einer vollständig ebenen Führungsfläche eben ausgebildet sind, und mit dem Stützkörper derart zusammenwirken, dass die Stützkante des Stützkörpers eine einreihige Zahnanordnung aufweist, wobei die Höhe der Zähne im in Transportrichtung T gesehen vorderen Bereich des Stützkörpers größer ist als im hinteren Bereich, so dass die Zähne des hinteren Bereichs unterhalb der durch die Führungsflächen aufgespannten Ebene liegen. Dadurch ist eine passive Trennung der Mittelgräte vom Stützkörper realisierbar, da die Mittelgräte mit ihrem hinteren, Richtung Kopf des Fisches weisenden Bereich quasi auf die Führungsflächen aufläuft, während die Zähne des vorderen, Richtung Schwanz weisenden Bereichs weiter mit der Mittelgräte verhakt sind und für den Transport sorgen. Diese Ausführung ist besonders zum Nachrüsten bestehender Vorrichtungen mit vorhandenen Führungselementen geeignet, da lediglich der Transportsattel ausgetauscht werden muss, indem ein Transportsattel mit in Bezug auf die Transportrichtung T von vorne nach hinten abnehmender Zahnhöhe eingesetzt wird.

Vorzugsweise ist das Mittel zum Abheben auf und ab bewegbar. Mit dieser erfindungsgemäßen Ausbildung besteht eine weitere Möglichkeit, die Mittelgräte aus dem Eingriff mit dem Stützkörper zu lösen.

Die Aufgabe wird auch durch ein Verfahren mit den eingangs genannten Schritten dadurch gelöst, dass die Mittelgräte des Fisches vor dem Freischneiden der dorsalen Rückengräten von der Stützkante des Stützkörpers abgehoben und dann mittig zur Stützkante zentriert wird. Die sich daraus ergebenden Vorteile wurden bereits im Zusammenhang mit der Vorrichtung erläutert, so dass zur Vermeidung von Wiederholungen auf die entsprechenden Passagen verwiesen wird.

Weitere zweckmäßige und/oder bevorzugte Merkmale und Weiterbildungen ergeben sich aus den Unteransprüchen und der Beschreibung. Eine besonders bevorzugte Ausführungsform der Erfindung wird anhand der beigefügten Zeichnung näher erläutert. In der Zeichnung zeigt:
- Fig. 1: eine schematische Darstellung einer erfindungsgemäßen Vorrichtung mit in das Schneidaggregat einlaufendem Stützkörper in perspektivischer Ansicht, wobei das Mittel zum Abheben der Mittelgräte durch bewegbare Führungselemente gebildet ist,
- Fig. 2: die Vorrichtung gemäß Figur 1 mit nahezu vollständig durch das Schneidaggregat hindurch geführtem Stützkörper,
- Fig.: 3 eine Vorderansicht der Vorrichtung gemäß Figur 1,
- Fig. 4: eine weitere Ausführungsform der erfindungsgemäßen Vorrichtung in perspektivischer Ansicht, wobei das Mittel zum Abheben durch Führungselemente mit entsprechenden Erhöhungen gebildet ist,
- Fig. 5: Ausschnitte einer weiteren Ausführungsform der erfindungsgemäßen Vorrichtung, wobei das Mittel zum Abheben durch eine bewegbar ausgebildete Führungswippe gebildet ist,
- Fig. 6: ein Transportsattel mit Zähnen, deren Höhe entgegen der Transportrichtung T von vorne nach hinten abnimmt,
- Fig. 7: eine schematische Darstellung eines Grätenskelettes einer Weißfischsorte in einem Schnitt im Bereich des siebten Wirbels,
- Fig. 8: eine schematische Darstellung einer erfindungsgemäßen Vorrichtung mit zwei übereinander angeordneten Kreismesserpaaren in Seitenansicht, wobei die Einrichtung zum Zentrieren der Mittelgräte selbst das Mittel zum Abheben der Mittelgräte bildet, und
- Fig. 9: die Vorrichtung gemäß Figur 8 in Vorderansicht.

Die in der Zeichnung dargestellte Vorrichtung dient zum Schneiden von Filets von einem geköpften und entweideten Fischrumpf. Die Vorrichtung ist zum Bearbeiten unterschiedlicher Fischsorten, insbesondere salmonider Fischsorten und Weisfischsorten, ausgebildet und eingerichtet. Selbstverständlich kann die Vorrichtung auch zum Freischneiden ausschließlich der Rückengräten oder der Bauchgräten eingesetzt werden.

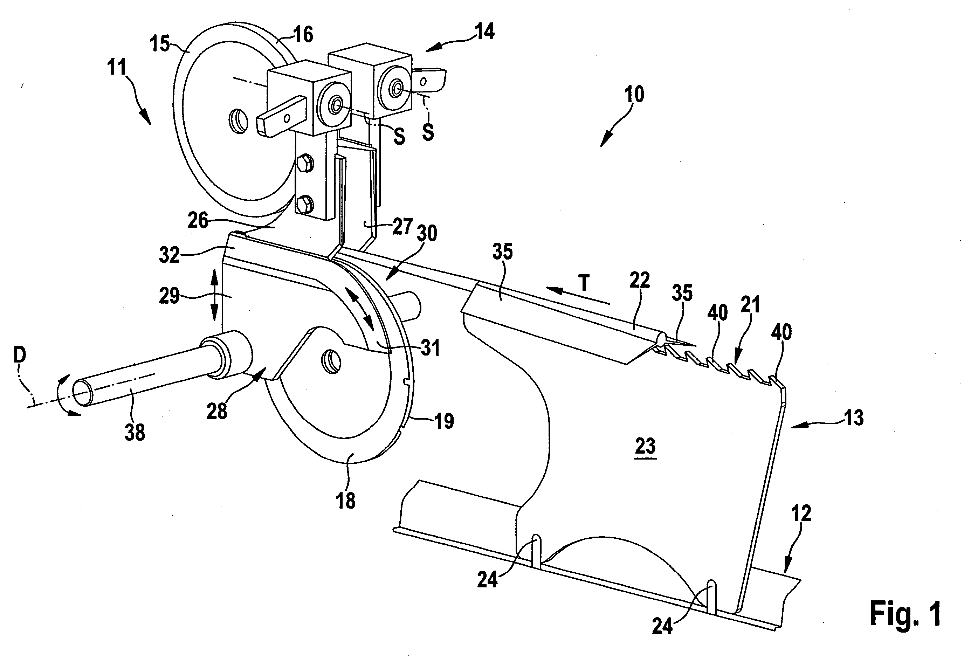

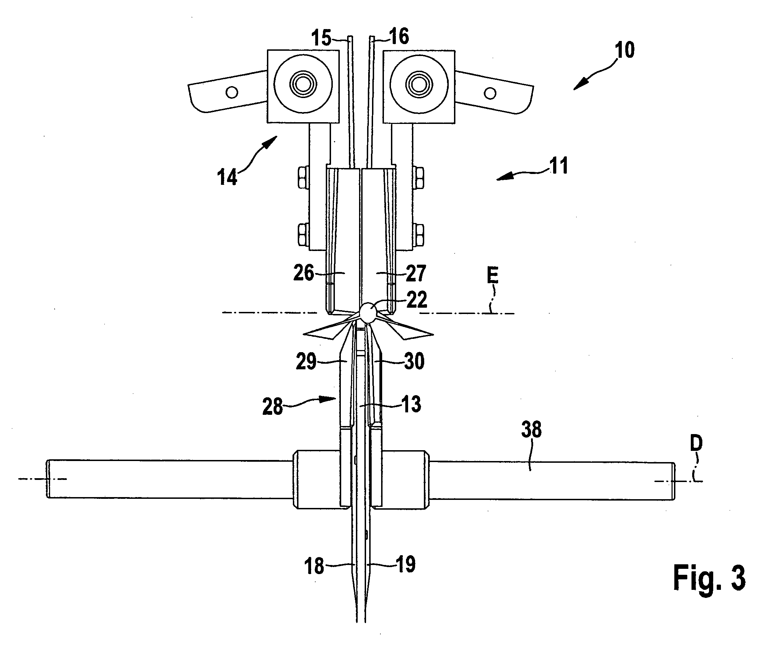

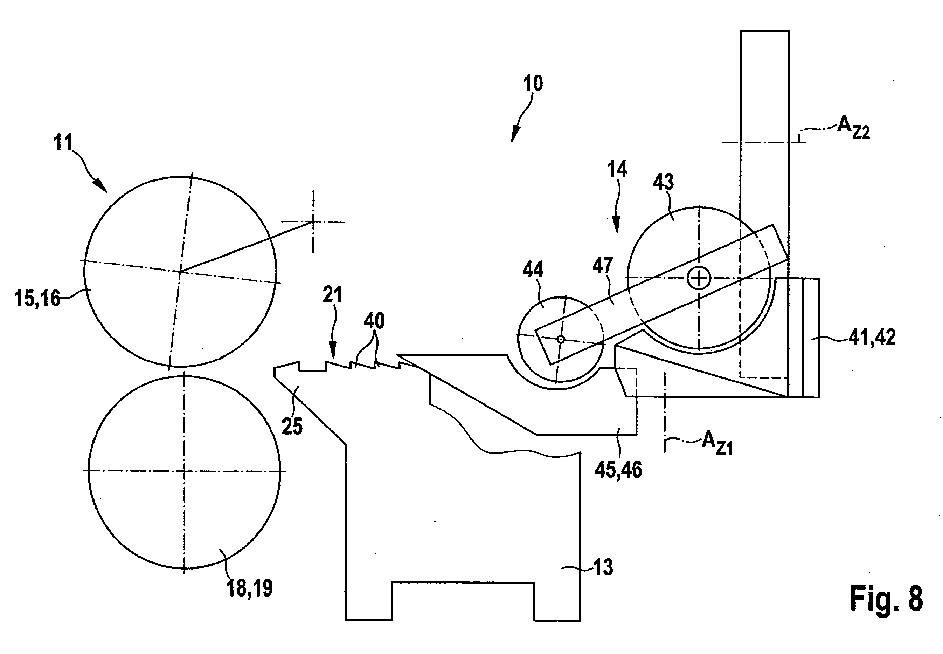

Die Vorrichtung 10 zum Filetieren geköpfter und entweideter Fische umfasst in üblicher Weise ein Schneidaggregat 11, einen endlos umlaufenden Transportförderer 12 mit mindestens einem Stützkörper 13 sowie eine Einrichtung 14 zum Zentrieren der Fische in Bezug auf den Stützkörper 13. Das Schneidaggregat 11 zum Filetieren der Fische weist mindestens ein Kreismesserpaar 15, 16 auf. Das rotierend antreibbare Kreismesserpaar 15, 16 ist in bekannter Weise zum Freischneiden der dorsalen Rückengräten ausgebildet und eingerichtet, nämlich oberhalb der durch den oder jeden umlaufenden Stützkörper 13 gebildeten Transportebene E und beabstandet zueinander angeordnet. Üblicherweise umfasst das Schneidaggregat 11 ein zweites Kreismesserpaar 18, 19 zum Freischneiden der ventralen Bauchgräten. Das zweite Kreismesserpaar 18, 19 ist entsprechend dem ersten Kreismesserpaar 15, 16 ausgebildet und unterhalb der Transportebene E angeordnet (siehe z.B. Figur 3). In Transportrichtung T der Fische, die Schwanz voraus durch den Schneidaggregat 11 transportiert werden, ist das untere Kreismesserpaar 18, 19 zum Schneiden der Bauchfilets vor dem oberen Kreismesserpaar 15, 16 zum Schneiden der Rückenfilets angeordnet (siehe z.B. Figur 1). Optional können die Kreismesserpaare 15, 16; 18, 19 auch übereinander, in Transportrichtung T versatzfrei angeordnet sein (siehe z.B. Figur 8).

Der endlos umlaufende Transportförderer 12 umfasst vorzugsweise mehrere Stützkörper 13. Diese sattelförmigen Stützkörper 13, die auch als Transportsattel bezeichnet werden, sind fest aber lösbar am Transportförderer 12 angeordnet und laufen mit diesem um. Die Stützkörper 13 sind zum Aufnehmen der Fische ausgebildet und eingerichtet. Durch den Antrieb des Transportelementes 12 sind die auf den Stützkörper 13 gesattelten Fische durch das Schneidaggregat 11 transportierbar. Zum Fixieren der Fische auf dem Stützkörper 13 weist dieser auf der Oberseite eine Stützkante 21 auf. Diese Stützkante 21 ist zur Herstellung einer formschlüssigen Verbindung zur Mittelgräte 22 des zu bearbeitenden Fisches ausgebildet. Der Stützkörper 13 weist einen Tragsteg 23 auf. Der Tragsteg 23 verfügt über Einrichtungen 24 zum Befestigen desselben am Transportförderer 12. An seiner Oberkante sind z.B. Zacken oder Zähne 40 angeordnet, die sich vorzugsweise über die gesamte Länge des Tragstegs 23 erstrecken. Die Zähne 40 können zweireihig und bevorzugt einreihig ausgebildet sein. In Transportrichtung T vorauslaufend mündet der Tragsteg 23 in eine Nase oder ein Horn 25. Die Ausrichtung der Zähne 40 ist variabel. Bevorzugt sind die Zähne 40 in Transportrichtung T geneigt angeordnet. Lediglich die Zähne 40 im Bereich des Horns 25 sind im gezeigten Ausführungsbeispiel entgegengesetzt gegen die Transportrichtung T geneigt. Selbstverständlich sind andere Anordnungen und Neigungen der Zähne 40 möglich. Die Dicke des Tragstegs 23 ist derart gewählt, dass der Tragsteg 23 zwischen dem beabstandet zueinander angeordneten Kreismesserpaar 18, 19 hindurch transportierbar ist.

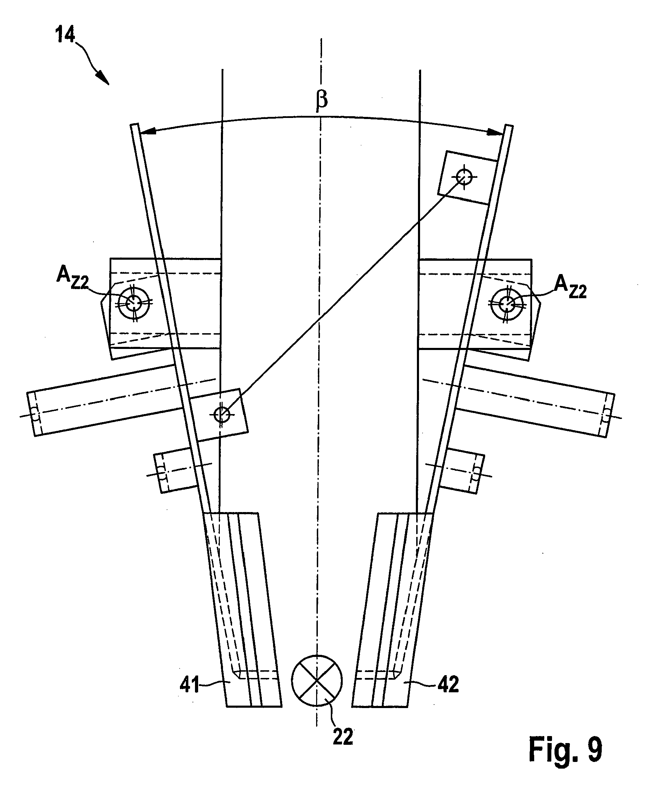

Wie erwähnt ist das untere Kreismesserpaar 18, 19, das unterhalb der Mittelgräte 22 in den Fisch bzw. die geöffnete Bauchhöhle eintaucht, in Transportrichtung T vorzugsweise vor dem oberen Kreismesserpaar 15, 16 angeordnet, wobei das obere Kreismesserpaar 15, 16 von oben und außen in den Rücken des Fisches schneidet. Oberhalb des unteren Kreismesserpaares 18, 19 und in Transportrichtung T vor dem oberen Kreismesserpaar 15, 16 ist die Einrichtung 14 zum Zentrieren der Fische angeordnet. Die Einrichtung 14 umfasst üblicherweise zwei Zentrierklappen 26, 27, die synchronisiert jeweils um eine Schwenkachse S schwenkbar sind, so dass der Abstand zwischen den beiden Zentrierklappen 26, 27 veränderbar ist. Solche zuvor beschriebenen Vorrichtungen 10 sind grundsätzlich bekannt, so dass auf eine detailliertere Beschreibung verzichtet wird. Es besteht des Weiteren die Möglichkeit, dass die Kreismesserpaare 15, 16; 18, 19 direkt übereinander angeordnet sind, so dass die Kreismesser 15, 16, 18, 19 gleichzeitig im Fischrumpf im Eingriff sind. Bei einer solchen Anordnung, wie die den Figuren 8 und 9 zu entnehmen ist, ist die Einrichtung 14 zum Zentrieren der Mittelgräte 22 in Transportrichtung T vor dem Schneidaggregat 11 angeordnet.

Diesen zuvor beschriebenen Vorrichtungen 10 ist erfindungsgemäß ein Mittel zum Abheben der Mittelgräte 22 der Fische von der Stützkante 21 des Stützkörpers 13 zugeordnet. Dieses Mittel ist im Bereich der Einrichtung 14 zum Zentrieren der Mittelgräte 22 angeordnet. Bevorzugt ist das Mittel unterhalb der Einrichtung 14 zum Zentrieren angeordnet. Das führt dazu, dass das Wirken des Mittels den Fisch aus der Formschlussverbindung mit dem Stützkörper 13 löst, so dass die Zentrierklappen 26, 27 freien Zugriff auf den dann partiell führungs- bzw. haltlosen Fisch haben, um diesen zu zentrieren. Mit Abheben des Fisches ist jedes Trennen bzw. Lösen der Mittelgräte 22 vom Stützkörper 13 beschrieben, unabhängig davon, ob die Mittelgräte 22 aktiv z.B. durch Ansteuern eines Betätigungselementes zur Veränderung der Position der Mittelgräte 22 oder passiv z.B. durch eine Zwangsführung der Mittelgräte 22 außer Eingriff mit den Zähnen 40 des Stützkörpers 13 gebracht wird.

In einer ersten Ausführungsform ist das Mittel zum Abheben ein Mittel 28 zum Anheben. Das Mittel 28 kann z.B. durch Führungselemente 29, 30 gebildet sein. Zu beiden Seiten des unteren Kreismesserpaares 18, 19 ist in dieser Ausführungsform ein Führungselement 29 bzw. 30 angeordnet, das sich in Transportrichtung T vorzugsweise von dem unteren Kreismesserpaar 18, 19 bis zum oberen Kreismesserpaar 15, 16 erstreckt. Jedes Führungselement 29, 30 ist vorzugsweise einteilig ausgebildet, kann aber selbstverständlich auch mehrteilig ausgebildet sein. Jedes Führungselement 29, 30 weist einen kreissegmentförmigen Abschnitt 31 und einen linearen Abschnitt 32 auf, wobei der lineare Abschnitt 32 parallel zur Transportrichtung T verläuft. Der lineare Abschnitt 32 bildet eine Führungsfläche für den Fisch bzw. die Mittelgräte 22.

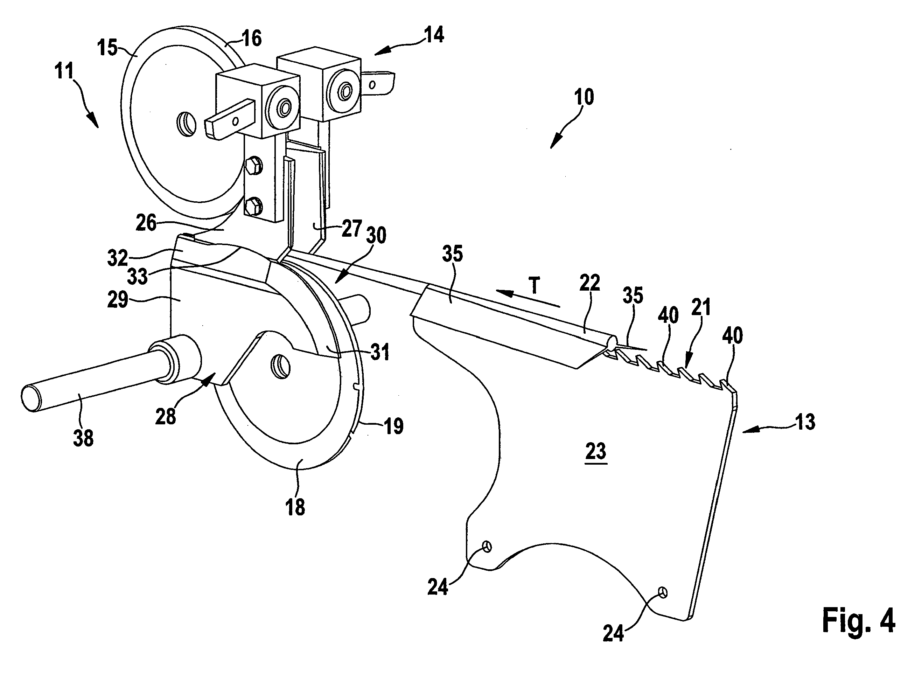

Zum Anheben der Mittelgräte 22 schlägt die Erfindung nunmehr unterschiedliche Möglichkeiten vor. Zum einen kann jedes Führungselement 29, 30 eine Erhöhung 33 zur Bildung einer unebenen Führungsfläche aufweisen (siehe z.B. Figur 4). Diese Erhöhung 33 ragt in Richtung der Einrichtung 14 zum Zentrieren über die Stützkante 21 des Stützkörpers 13 hinaus. Genauer liegt die Oberkante der Erhöhung 33 über der Oberkante der durch die Zähne 40 gebildeten Stützkante 21. Anders ausgedrückt liegt die Mittelgräte 22 im Bereich der Erhöhung 33 auf dieser auf, während die Mittelgräte 22 in Transportrichtung T gesehen zumindest hinter der Erhöhung 33 auf den Zähnen 40 aufliegt. Sobald also der zu bearbeitende Fisch mit dem Stützkörper 13 den Bereich der Erhöhung 33 passiert, löst die Erhöhung 33 die Verbindung zwischen Mittelgräte 22 und Stützkante 21, während der Fisch bzw. die Mittelgräte 22 in den anderen Bereichen der Führungselemente 29, 30 mit der Stützkante 21 in Wirkverbindung steht.

Die Erhöhung 33 ist bevorzugt im linearen Abschnitt 32 der Führungselemente 29, 30 ausgebildet bzw. angeordnet. Die Erhöhung 33 kann einstückig mit dem Führungselement 29, 30 ausgebildet sein, also einen integralen Bestandteil bilden. Des Weiteren kann die Erhöhung 33 auch ein lösbar am Führungselement 29, 30 befestigtes Element zur Veränderung der Topographie der Führungsfläche sein. In Transportrichtung T kann sich die Erhöhung 33 über einen Teil der Länge des linearen Abschnitts 32 erstrecken. In nicht gezeigten Ausführungsformen kann die Erhöhung auch nur punktuell wirken oder sich von dem kreissegmentförmigen Abschnitt 31 bis in den Bereich des linearen Abschnitts 32 erstrecken.

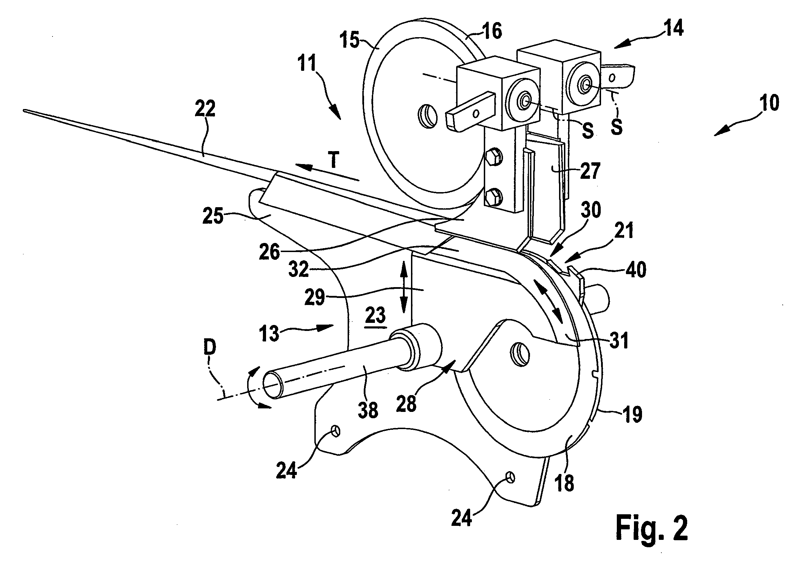

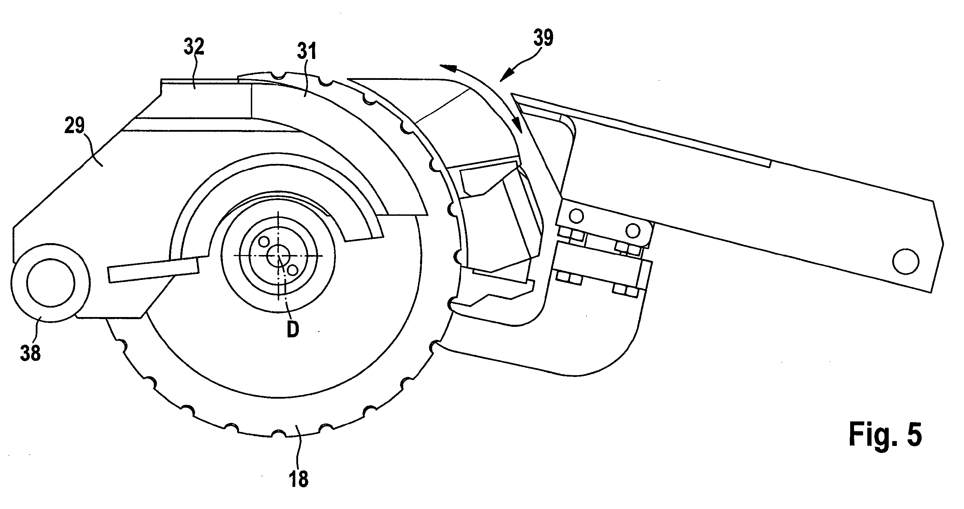

Das Mittel 28 zum Anheben bzw. die das Mittel 28 bildenden Führungselemente 29, 30 können unabhängig von der Topographie der Führungsfläche auf und ab bewegbar ausgebildet sein (siehe z.B. Figuren 1 und 2). In weiteren Ausführungsformen können auch andere das Mittel 28 bildende Komponenten, wie z.B. eine in Transportrichtung T der Fische vor dem unteren Kreismesserpaar 18, 19 angeordnete Führungswippe 39 (siehe z.B. Figur 5), zum Anheben der Mittelgräte 22 auf und ab bewegbar ausgebildet sein. Dazu kann den auf und ab bewegbaren Elementen z.B. ein Antrieb für eine Linearbewegung, ein Antrieb für eine Rotations- bzw. Schwenkbewegung um eine Drehachse D, ein Pneumatikzylinder, ein Federelement mit Anschlag oder jedes andere übliche Betätigungsorgan zugeordnet sein. Das Mittel 28, also z.B. die Führungselemente 29, 30 oder andere das Mittel 28 bildende Komponenten können zur Veränderung ihrer Position individuell ansteuerbar sein. Durch die Linear- und/oder Rotationsbewegung sind die Führungselemente 29, 30 oder die anderen das Mittel 28 bildenden Komponenten zeitlich und örtlich begrenzt über die Transportebene E hinaus zum Anheben der Mittelgräte 22 von der Stützkante 21 nach oben bewegbar. Zur Ausübung der Bewegungen bieten sich unterschiedliche Möglichkeiten an. So können z.B. die Führungselemente 29, 30 relativ zur Welle 38 gedreht werden. Die Führungselemente 29, 30 können aber auch drehfest auf der Welle 38 angeordnet sein, so dass die Rotation der Welle selbst zur Positionsveränderung führt. Bevorzugt sind die Führungselemente 29, 30 bzw. die entsprechenden Komponenten in ihrer ansteuerbaren Bewegung synchronisiert, so dass die Mittelgräte 22 zu beiden Seiten synchron und symmetrisch von der Mittelgräte 22 angehoben und wieder auf diese abgesetzt wird.

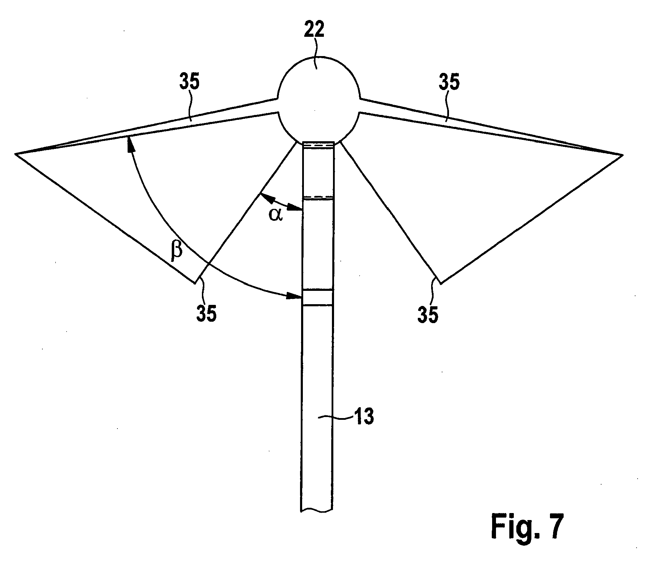

Bei einer weiteren Ausführungsform der Erfindung kommt dem Stützkörper 13 eine besondere Bedeutung zu. Bei einer Vorrichtung 10, wie sie weiter oben beschrieben ist, kann das Mittel zum Abheben der Mittelgräte auch durch eine Wirkverbindung zwischen den Führungselemente 29, 30 und dem Stützkörper 13 gebildet sein. Dazu sind die Führungselemente 29, 30 zur Bildung einer vollständig ebenen Führungsfläche eben ausgebildet. Mit anderen Worten sind die Führungselemente 29, 30 frei von Erhöhungen. Korrespondierend dazu weist der Stützkörper 13 an seiner Stützkante 21 Zähne 40 auf, deren Höhe ausgehend vom in Transportrichtung T vorderen Bereich nach hinten abnimmt (siehe z.B. Figur 7). Anders ausgedrückt sind die vorauslaufenden Zähne 40 höher als die nachlaufenden Zähne 40, derart, dass die Zähne 40 im hinteren Bereich unterhalb der durch die Führungsflächen aufgespannten Ebene liegen. Während der Fisch mit seiner Mittelgräte 22 im Bereich des vorauslaufenden Schwanzes permanent auf der Stützkante 21 aufliegt, wird die Mittelgräte 22 im Bereich des Kopfes durch das Auflaufen auf die oberhalb der Stützkante 21 liegenden Führungsflächen von der Stützkante 21 gelöst. Bevorzugt weist der Stützkörper 13 bei dieser Ausführungsform eine einzelne Zahnreihe auf. Allerdings kann der Stützkörper 13 auch mit zwei parallelen und beabstandeten Zahnreihen ausgestattet sein.

Bei der Ausführungsform gemäß der Figuren 8 und 9 umfasst die Einrichtung 14 ein erstes Paar seitliche Zentrierklappen 41, 42, mindestens eine Zentrierrolle 43, mindestens eine Halterolle 44 sowie ein zweites Paar seitliche Zentrierklappen 45, 46. Vorzugsweise sind jedoch zwei Zentrierrollen 43 und zwei Halterollen 44 vorgesehen. Die Zentrierrollen 43 und die Halterollen 44 sind an einem gemeinsamen Schwenkarm 47 angeordnet. Das Zentrierklappenpaar 45, 46 ist über einen nicht dargestellten Träger um eine vertikal zur Transportebene ausgerichtete Achse A_{Z1} schwenkbar. Das Zentrierklappenpaar 41, 42 ist um eine horizontale Achse A_{Z2} schwenkbar. Sowohl die Zentrierrollen 43 als auch die Halterollen 44 wirken von oben auf den auf dem Stützkörper 13 befindlichen Fischrumpf. Sowohl die Zentrierrollen 43 als auch die Halterollen 44 sind konisch bzw. stumpfkegelig geformt und liegen jeweils paarweise einander gegenüber, so dass der Fischrumpf mittig zwischen den Zentrierrollen 43 geführt und zwischen den Halterollen 44 gehalten wird.

Das erste Paar seitlicher Zentrierklappen 41, 42 ist gleichzeitig als Mittel zum Abheben der Mittelgräte 22 vom Stützkörper 13 ausgebildet. Mit anderen Worten ist die Einrichtung 14 selbst das Mittel zum Abheben. Die Zentrierklappen 41, 42 weisen eine sich nach oben hin öffnende Anordnung auf. Anders ausgedrückt verlaufen die beiden beabstandeten Zentrierklappen 41, 42 nicht parallel sondern in einem Winkel β zueinander (siehe insbesondere Figur 9). Der Winkel β ist vorzugsweise zwischen 1 ° und 5°, kann aber auch größer 5° sein. Durch den ausgehend von der Transportebene nach oben hin größer werdenden Abstand der Zentrierklappen 41, 42 wird der Fischrumpf beim Transport auf dem Stützkörper 13 durch die seitlichen Zentrierklappen 41, 42 von der Mittelgräte 22 abgehoben. Die nachfolgenden Zentrierrollen 43 richten den Fischrumpf weiter auf und zentrieren diesen. Das zweite Paar seitlicher Zentrierklappen 45, 46 hält und zentriert den Fischrumpf auf dem Stützkörper 13, während die Halterollen 44 den Fischrumpf nach unten drücken, so dass der Fischrumpf mittig und fest auf der Stützkante 21 des Stützkörpers 13 liegt. Der Einrichtung 14 kann in Transportrichtung T noch vor dem Schneidaggregat 11 mindestens ein nicht explizit dargestellter Flossenaufrichter folgen. Vorzugsweise sind jedoch zwei Flossenaufrichter vorgesehen. Diese Flossenaufrichter wirken nach den Halterollen 44, bevor der Fischrumpf dem Schneidaggregat 11 zugeführt wird. Diese Einrichtung 14 wirkt wie auch bei den weiter oben beschriebenen Ausführungsformen vorzugsweise im Bereich des Stützkörpers 13, also im Bereich der Bauchhöhle des Fischrumpfes.

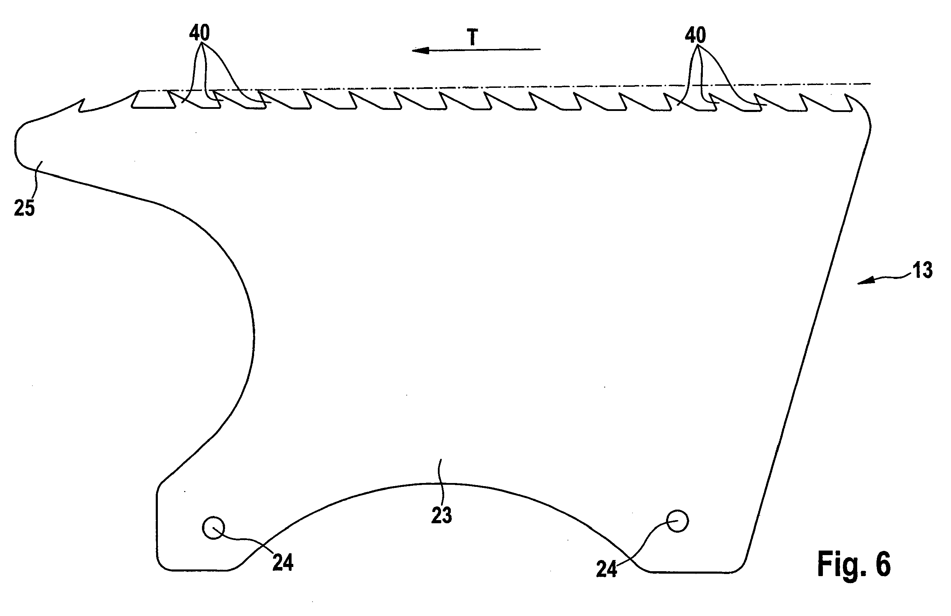

In weiteren nicht explizit dargestellten Ausführungsformen kann der Formschluss zwischen dem Stützkörper 13 und der Mittelgräte 22 auch durch andere Oberflächengestaltungen, wie z.B. Noppen oder dergleichen herstellbar sein. Es besteht auch die Möglichkeit, dass der Fisch durch Kraftschluss auf dem Stützkörper 13 gehalten wird, wobei dieser Kraftschluss zum Abheben bzw. Anheben der Mittelgräte 22 gelöst wird. Die weiter oben beschriebenen Ausführungsformen können auch miteinander kombiniert werden. So besteht z.B. die Möglichkeit, die Ausführungsform gemäß der Figur 4 mit einem Stützkörper 13 zu kombinieren, wie er in Figur 6 gezeigt ist. Auch kann der Fisch insgesamt über die gesamte Länge der Mittelgräte 22 von der Stützkante 21 durch entsprechende Ausbildung der Erhöhung 33 und/oder die gezielte Ansteuerung der Führungselemente 29, 30 oder der anderen das Mittel 28 bildenden Komponenten gelöst werden.

In Figur 7 ist noch einmal schematisch das Grätenskelett einer Weißfischsorte, geschnitten im Bereich des siebten Wirbels dargestellt. Ausgehend von der Mittelgräte 22 erstrecken sich die Rippenansätze 35. Im schwanzseitigen Bereich der Bauchhöhle liegen die Rippenansätze 35 in einem engen Winkel α zur Mittelgräte 22. In Richtung Kopf vergrößert sich dieser Winkel. Im kopfseitigen Bereich der Bauchhöhle stehen die Rippenansätze 35 nahezu seitlich von der Mittelgräte 22 ab, liegen also in einem weiten Winkel β zur Mittelgräte 22. Im Bereich des Winkels α verhindern die Rippenansätze 35 ein Abrutschen der Mittelgräte 22 vom Stützkörper 13. Im Bereich des Winkels β fehlt diese Führungsfunktion, so dass die Mittelgräte 22 nach links oder rechts vom Stützkörper 13 rutschen kann. Unterstützt wird dieses Abrutschen der Mittelgräte 22 auch durch weitere anatomische Besonderheiten, wie z.B. eine nach unten vorstehende Mittelgräte 22 oder dergleichen.

Im Folgenden wird das Verfahrensprinzip anhand der beigefügten Zeichnung näher erläutert:
Eine Bedienperson legt den entweideten und geköpften Fisch mit der offenen Bauchhöhle nach unten auf den Stützkörper 13, so dass der Fisch mit seinem Schwanzbereich voraus an dem Horn 25 des Stützkörpers 21 liegt. Der Fischrumpf liegt dann vorzentriert mit der Mittelgräte 22 auf den Zähnen 40 der Stützkante 21, so dass eine formschlüssige Verbindung zwischen der Mittelgräte 22 und den Zähnen 40 hergestellt ist, wobei es passieren kann, dass die Mittelgräte 22 aufgrund von geometrischen/anatomischen Besonderheiten und/oder der Anordnung der Rippenansätze insbesondere in Richtung des Fischkopfes neben der Stützkante 21 liegt. Der Fischrumpf wird dann mittels des Stützkörpers 13 durch den Schneidaggregat 11 transportiert. Zunächst trennen die Kreismesser 18, 19 die Bauchfilets vom Grätenskelett (Freischneiden der ventralen Bauchgräten), indem der Stützkörper 13 zwischen den Kreismessern 18, 19 hindurch transportiert wird.

Nach dem Freischneiden der ventralen Bauchgräten wird die Mittelgräte 22 kurzzeitig von den Zähnen 40 abgehoben. Dadurch ist die Mittelgräte 22 außer Eingriff mit den Zähnen 40, so dass die Mittelgräte 22 und damit der Fischrumpf frei ist. In diesem Augenblick ist es möglich, den möglicherweise nicht voll zentrierten Fischrumpf fein zu zentrieren, indem sich die Zentrierklappen 26, 27 synchron aufeinander zu bewegen. Mit anderen Worten wird der möglicherweise nicht mittig auf dem Stützkörper 13 liegende Fischrumpf angehoben und dann durch die vom Fischeinseitig geöffneten Zentrierklappen 26, 27 in die zentrische Position gebracht, so dass der Fischrumpf zentriert dem oberen Kreismesserpaar 15, 16 zugeführt werden kann. Dieser Vorgang der Feinzentrierung ist zeitlich derart aufeinander abgestimmt, dass über eine Art Reißverschlussprinzip immer Zähne 40 mit der Mittelgräte 22 in Eingriff sind und so für den Transport sorgen.

Das Abheben der Mittelgräte 22 kann auf unterschiedliche Weise erfolgen. Bei der Ausführungsform gemäß der Figuren 1 bis 3 wird der Fischrumpf durch das aktive Ansteuern der Führungselemente 29, 30 angehoben. Durch das lineare und/oder rotatorische Bewegen der Führungselemente 29, 30 oder Teilen davon kann der Fischrumpf gezielt von der Stützkante 21 gelöst werden. Bei der Ausführungsform gemäß der Figur 4 werden die Fischrümpfe beim Auflaufen auf die Führungselemente 29, 30 bzw. auf deren Führungsflächen durch die Erhöhung 33 angehoben. In der Ausführungsform gemäß der Figur 5 ist die Führungswippe 39 für das Anheben der Fischrümpfe verantwortlich. Die Führungswippe 39 ist z.B. über ein Federelement in einer oberen Position gegen einen Anschlag gehalten. Dieser Anschlag ist so gewählt, dass das Freischneiden der Bauchgräten, also der so genannte Schwanzschnitt, nicht beeinträchtigt ist. Anders ausgedrückt ist der Anschlag so eingestellt, dass die Oberkante der Führungswippe 39 unterhalb der Stützkante 21 liegt. Sobald die Bauchgräten freigeschnitten sind, kann der Anschlag entweder nach oben verstellt werden, so dass der Fischrumpf beim Passieren der Führungswippe 39 von der Mittelgräte 22 abgehoben wird. Eine andere Möglichkeit besteht darin, die Führungswippe 39 aktiv nach oben zu bewegen, um so die Mittelgräte 22 über die Stützkante 21 hinaus zu heben. Ein passives Anheben der Mittelgräte 22 wird erreicht, wenn der Stützkörper 13 gemäß Figur 6 zum Einsatz kommt. Durch die unterschiedliche Zahnhöhe sind die vorderen Zähne 40 im Bereich des Horns 25 permanent im Eingriff mit der Mittelgräte 22. Die niedrigeren Zähne 40 im Bereich des Kopfes liegen unterhalb der Führungsflächen z.B. der Führungselemente 29, 30, so dass die Mittelgräte 22 auf die Führungsflächen gleitet, während die Zähne 40 in diesem Bereich unterhalb der Führungsflächen weiter laufen.

Das erfindungsgemäße Verfahren kann auch ohne das Freischneiden der Bauchgräten durchgeführt werden. Die Bauchgräten und die Rückengräten können auch zeitgleich freigeschnitten werden. Für diesen Fall erfolgt das Abheben bzw. Anheben der Mittelgräte 22 sowie das Zentrieren auf dem Stützkörper 13 vor dem Schneidaggregat 11, also vor beiden Kreismesserpaaren 15, 16; 18, 19. Entscheidend beim Abheben bzw. Anheben der Mittelgräte 22 ist der Bereich der Bauchhöhle, also der Bereich, mit dem der Fischrumpf auf dem Stützkörper 13 aufliegt. Wenn die Kreismesser 15, 16; 18, 19 übereinander liegen, wird der Fischrumpf und insbesondere die Mittelgräte 22 beim Einlaufen in die seitlichen Zentrierklappen 41, 42 angehoben und synchronisiert mittig zentriert. Die Zentrierrollen 43 richten den Fischrumpf durch ihre kegelige Gestalt auf. Die weiteren Zentrierklappen 45, 46 halten den Fischrumpf synchronisiert mittig, während die Halterollen 44 den Fischrumpf nach unten drücken. Im weiteren Verlauf richten die Flossenaufrichter die Flossen auf, bevor der Fischrumpf den Kreismessern 15, 16; 18, 19 zugeführt wird.

## Patentansprüche

1. Vorrichtung (10) zum Filetieren von geköpften und entweideten Fischen, umfassend ein Schneidaggregat (11) zum Filetieren der Fische, wobei das Schneidaggregat (11) mindestens ein Kreismesserpaar (15, 16) aufweist, einen endlos umlaufenden Transportförderer (12) mit mindestens einem sattelförmigen Stützkörper (13) zum Aufnehmen der Fische und Fördern derselben durch das Schneidaggregat (11) mit dem Schwanz voraus, wobei jeder Stützkörper (13) eine Stützkante (21) zur Herstellung einer formschlüssigen Verbindung zur Mittelgräte (22) des zu bearbeitenden Fisches aufweist, sowie eine Einrichtung (14) zum Zentrieren der Mittelgräte (22) in Bezug auf den Stützkörper (13), **dadurch gekennzeichnet , dass** ein Mittel zum Abheben der Mittelgräte (22) der Fische von der Stützkante (21) des Stützkörpers (13) vorgesehen ist, das im Bereich der Einrichtung (14) zum Zentrieren der Mittelgräte (22) angeordnet ist.

2. Vorrichtung nach Anspruch 1, **dadurch gekennzeichnet, dass** das Schneidaggregat (11) ein unteres Kreismesserpaar (18, 19) zum Freischneiden der ventralen Bauchgräten und ein oberes Kreismesserpaar (15, 16) zum Freischneiden der dorsalen Rückengräten umfasst, wobei das obere Kreismesserpaar (15, 16) in Transportrichtung T der Fische Schwanz voraus hinter dem unteren Kreismesserpaar (18, 19) angeordnet ist und das Mittel zum Abheben der Mittelgräte (22) ein Mittel (28) zum Anheben der Mittelgräte (22) ist und sich zu beiden Seiten des unteren Kreismesserpaares (18, 19) in Transportrichtung T von dem unteren Kreismesserpaar (18, 19) bis zum oberen Kreismesserpaar (15, 16) erstreckt.

3. Vorrichtung nach Anspruch 1 oder 2, **dadurch gekennzeichnet, dass** das Mittel zum Abheben unterhalb der Einrichtung (14) zum Zentrieren der Mittelgräte (22) angeordnet ist.

4. Vorrichtung nach einem der Ansprüche 1 bis 3, **dadurch gekennzeichnet, dass** das Mittel zum Abheben der Mittelgräte (22) zwei Führungselemente (29, 30) umfasst, die jeweils eine Erhöhung (33) zur Bildung einer unebenen Führungsfläche aufweisen, wobei die Erhöhung (33) in Richtung der Einrichtung (14) zum Zentrieren der Mittelgräte (22) über die Stützkante (21) des Stützkörpers (13) hinaus ragt.

5. Vorrichtung nach Anspruch 4, **dadurch gekennzeichnet, dass** die Führungselemente (29, 30) einen kreissegmentförmigen Abschnitt (31) und einen linearen Abschnitt (32) aufweisen, wobei der lineare Abschnitt (32) parallel zur Transportrichtung T verläuft.

6. Vorrichtung nach Anspruch 5, **dadurch gekennzeichnet, dass** die Erhöhung (33) im linearen Abschnitt (32) des jeweiligen Führungselementes (29, 30) ausgebildet ist.

7. Vorrichtung nach Anspruch 5 oder 6, **dadurch gekennzeichnet, dass** sich die Erhöhung (33) in Transportrichtung T über einen Teil der Länge des linearen Abschnitts (32) erstreckt.

8. Vorrichtung nach einem der Ansprüche 1 bis 3, **dadurch gekennzeichnet, dass** das Mittel zum Abheben der Mittelgräte (22) zwei Führungselemente (29, 30) umfasst, die jeweils in Transportrichtung T zur Bildung einer vollständig ebenen Führungsfläche eben ausgebildet sind, und mit dem Stützkörper (13) derart zusammenwirken, dass die Stützkante (21) des Stützkörpers (13) eine einreihige Zahnanordnung aufweist, indem die Höhe der Zähne (40) im in Transportrichtung T gesehen vorderen Bereich des Stützkörpers (13) größer ist als im hinteren Bereich, so dass die Zähne (40) des hinteren Bereichs unterhalb der durch die Führungsflächen aufgespannten Ebene liegen.

9. Vorrichtung nach einem der Ansprüche 1 bis 8, **dadurch gekennzeichnet, dass** das Mittel zum Abheben auf und ab bewegbar ausgebildet ist.

10. Vorrichtung nach Anspruch 9, **dadurch gekennzeichnet, dass** die Führungselemente (29, 30) zur Veränderung ihrer Position individuell ansteuerbar sind.

11. Verfahren zum Filetieren von geköpften und entweideten Fischen, mit den Schritten:
- Transportieren eines mit seiner Mittelgräte (22) auf einer Stützkante (21) eines Stützkörpers (13) mit dem Rücken nach oben aufliegenden Fisches Schwanz voraus durch eine Vorrichtung zum Filetieren von Fischen, wobei während des Transports
- die dorsalen Rückengräten mittels eines Kreismesserpaares (15, 16) freigeschnitten werden,
**dadurch gekennzeichnet, dass** die Mittelgräte (22) des Fisches vor dem Freischneiden der dorsalen Rückengräten von der Stützkante (21) des Stützkörpers (13) abgehoben und dann mittig zur Stützkante (21) zentriert wird.

12. Verfahren nach Anspruch 11, **dadurch gekennzeichnet, dass** vor dem Freischneiden der dorsalen Rückengräten erst die ventralen Bauchgräten mittels eines zweiten Kreismesserpaares (18, 19) freigeschnitten werden.

13. Verfahren nach Anspruch 11 oder 12, **dadurch gekennzeichnet, dass** die Mittelgräte (22) unterhalb von Zentrierklappen (26, 27) abgehoben und nach dem Abheben durch die Zentrierklappen (26, 27) zentriert wird.

14. Verfahren nach einem der Ansprüche 11 bis 13, **dadurch gekennzeichnet, dass** die Mittelgräte (22) aktiv durch Führungselemente (29, 30) und/oder den Führungselementen (29, 30) zugeordnete Erhöhungen (33) angehoben wird.

15. Verfahren nach einem der Ansprüche 11 bis 14, **dadurch gekennzeichnet, dass** die Mittelgräte (22) aktiv durch eine dem Kreismesserpaar (18, 19) zum Freischneiden der Bauchgräten vorgeordnete Führungswippe (39) angehoben wird.

16. Verfahren nach einem der Ansprüche 11 bis 13, **dadurch gekennzeichnet, dass** die Mittelgräte (22) passiv durch Auflaufen auf durch Führungselemente (29, 30) gebildete Führungsflächen angehoben wird.

## Claims

1. Apparatus (10) for filleting beheaded and gutted fish, comprising a cutting unit (11) for filleting the fish, wherein the cutting unit (11) has at least one pair of circular blades (15, 16), an endlessly rotating transport conveyor (12) having at least one saddle-shaped supporting body (13) for receiving the fish and conveying them through the cutting unit (11) tail first, wherein each supporting body (13) has a supporting edge (21) for making a form-locking connection with the centre bone (22) of the fish to be processed, and a device (14) for centring the centre bone (22) in relation to the supporting body (13), **characterised in that** a means for lifting the centre bone (22) of the fish off the supporting edge (21) of the supporting body (13) is provided, which is arranged in the region of the device (14) for centring the centre bone (22).

2. Apparatus according to claim 1, **characterised in that** the cutting unit (11) comprises a lower pair of circular blades (18, 19) for cutting free the ventral bones and an upper pair of circular blades (15, 16) for cutting free the dorsal bones, wherein the upper pair of circular blades (15, 16) is arranged behind the lower pair of circular blades (18, 19) in the direction of transport T of the fish tail first, and the means for lifting the centre bone (22) off is a means (28) for lifting the centre bone (22) and extends on both sides of the lower pair of circular blades (18, 19) in the direction of transport T from the lower pair of circular blades (18, 19) to the upper pair of circular blades (15, 16).

3. Apparatus according to claim 1 or 2, **characterised in that** the lifting-off means is arranged below the device (14) for centring the centre bone (22).

4. Apparatus according to any of claims 1 to 3, **characterised in that** the means for lifting the centre bone (22) off comprises two guide elements (29, 30) which each have a raised area (33) to form an uneven guide surface, wherein the raised area (33) protrudes beyond the supporting edge (21) of the supporting body (13) in the direction of the device (14) for centring the centre bone (22).

5. Apparatus according to claim 4, **characterised in that** the guide elements (29, 30) have a circle segment-shaped section (31) and a linear section (32), wherein the linear section (32) runs parallel to the direction of transport T.

6. Apparatus according to claim 5, **characterised in that** the raised area (33) is formed in the linear section (32) of the respective guide element (29, 30).

7. Apparatus according to claim 5 or 6, **characterised in that** the raised area (33) extends over part of the length of the linear section (32) in the direction of transport T.

8. Apparatus according to any of claims 1 to 3, **characterised in that** the means for the lifting the centre bone (22) off comprises two guide elements (29, 30) which are each designed planar in the direction of transport T to form a completely planar guide surface, and cooperate with the supporting body (13) in such a way that the supporting edge (21) of the supporting body (13) has a single-row tooth arrangement, wherein the height of the teeth (40) in the front region of the supporting body (13), seen in the direction of transport T, is greater than in the rear region, so that the teeth (40) of the rear region lie below the plane spanned by the guide surfaces.

9. Apparatus according to any of claims 1 to 8, **characterised in that** the lifting-off means is designed to be movable up and down.

10. Apparatus according to claim 9, **characterised in that** the guide elements (29, 30) are individually controllable to alter their position.

11. Method for filleting beheaded and gutted fish, having the steps of:
- transporting a fish resting with its centre bone (22) on a supporting edge (21) of a supporting member (13) with its back at the top, tail first through an apparatus for filleting fish, wherein during transport
- the dorsal back bones are cut free by means of a pair of circular blades (15, 16),
**characterised in that** the centre bone (22) of the fish is lifted off the supporting edge (21) of the supporting body (13) before the dorsal bones are cut free, and then centred centrally to the supporting edge (21).

12. Method according to claim 11, **characterised in that**, before the dorsal back bones are cut free, first the ventral belly bones are cut free by means of a second pair of circular blades (18, 19).

13. Method according to claim 11 or 12, **characterised in that** the centre bone (22) is lifted off below centring flaps (26, 27) and, after lifting off, centred by the centring flaps (26, 27).

14. Method according to any of claims 11 to 13, **characterised in that** the centre bone (22) is lifted actively by guide elements (29, 30) and/or raised areas (33) associated with the guide elements (29, 30).

15. Method according to any of claims 11 to 14, **characterised in that** the centre bone (22) is actively lifted by a guide rocker (39) mounted in front of the pair of circular blades (18, 19) for cutting free the ventral bones.

16. Method according to any of the claims 11 to 13, **characterised in that** the centre bone (22) is passively lifted by running onto guide surfaces formed by guide elements (29, 30).

## Revendications

1. Dispositif (10) de filetage de poissons décapités et éviscérés, comprenant un moyen de découpe (11) pour fileter les poissons, le moyen de découpe (11) comprenant au moins une paire de lames rotatives (15, 16), une bande transporteuse sans fin (12) avec au moins un corps d'appui en étrier (13) pour la prise en charge et le transport des poissons à travers le moyen de découpe (11), la queue la première, chacun des corps d'appui (13) disposant d'un bord d'appui (21) pour créer une liaison mécanique avec l'arête centrale (22) du poisson à traiter, ainsi que d'un dispositif (14) de centrage de l'arête centrale (22) par rapport au corps d'appui (13), **caractérisé en ce qu'**un moyen de soulèvement de l'arête centrale (22) des poissons du bord d'appui (21) du corps d'appui (13) est préau, ce moyen étant agencé au niveau du dispositif (14) de centrage de l'arête centrale (22).

2. Dispositif selon la revendication 1, **caractérisé en ce que** le moyen de découpe (11) comprend une paire de lames rotatives inférieures (18, 19) pour dégager les arêtes ventrales et une paire de lames rotatives supérieures (15, 16) pour dégager les arêtes dorsales, la paire de lames rotatives supérieures (15, 16) étant agencée en aval de la paire de lames rotatives inférieures (18, 19) dans le sens du transport T des poissons la queue la première, le moyen de soulèvement de l'arête centrale (22) étant un moyen (28) de soulèvement de l'arête centrale (22) s'étendant de part et d'autre de la paire de lames rotatives inférieures (18, 19) dans le sens du transport T, depuis la paire de lames rotatives inférieures (18, 19) et jusqu'à la paire de lames rotatives supérieures (15, 16).

3. Dispositif selon la revendication 1 ou la revendication 2, **caractérisé en ce que** le moyen de soulèvement est agencé en dessous du dispositif (14) de centrage de l'arête centrale (22).

4. Dispositif selon l'une des revendications 1 à 3, **caractérisé en ce que** le moyen de soulèvement de l'arête centrale (22) comprend deux éléments de guidage (29, 30) disposant chacun d'un rehaussement (33) pour former une surface de guidage dénivelée, le rehaussement (33) dépassant le bord d'appui (21) du corps d'appui (13) dans le sens du dispositif (14) de centrage de l'arête centrale (22).

5. Dispositif selon la revendication 4, **caractérisé en ce que** les éléments de guidage (29, 30) présentent une section segmentaire (31) et une section linéaire (32), la section linéaire (32) s'étendant parallèlement au sens du transport T.

6. Dispositif selon la revendication 5, **caractérisé en ce que** le rehaussement (33) est compris dans la section linéaire (32) de l'élément de guidage (29, 30) correspondant.

7. Dispositif selon la revendication 5 ou la revendication 6, **caractérisé en ce que** le rehaussement (33) s'étend dans le sens du transport T sur une partie de la longueur de la section linéaire (32).

8. Dispositif selon l'une des revendications 1 à 3, **caractérisé en ce que** le moyen de soulèvement de l'arête centrale (22) comprend deux éléments de guidage (29, 30), lesquels sont disposés (respectivement) à plat pour former une surface de guidage entièrement plate dans le sens de transport T, coopérant avec le corps d'appui (13) de sorte (à ce) que le bord d'appui (21) du corps d'appui (13) dispose d'un ensemble denté à un seul rang, la hauteur des dents (40), vue dans le sens du transport T, étant plus grande dans la partie avant du corps d'appui (13) que dans la partie arrière, de sorte que les dents (40) comprises dans la partie arrière se trouvent en dessous du plan formé par les surfaces de guidage.

9. Dispositif selon l'une des revendications 1 à 8, **caractérisé en ce que** le moyen de soulèvement est réalisé de sorte à pouvoir monter et descendre.

10. Dispositif selon la revendication 9, **caractérisé en ce que** les éléments de guidage (29, 30) peuvent être asservis séparément pour leur changement de position.

11. Procédé de filetage de poissons décapités et éviscérés, comprenant les étapes suivantes :
- le transport à travers un dispositif de filetage de poissons d'un poisson posé le dos vers le haut et la queue la première, l'arête centrale (22) sur un bord d'appui (21) d'un corps d'appui (13),
- le dégagement des arêtes dorsales durant le transport, au moyen d'une paire de lames rotatives (15, 15),
**caractérisé en ce que** l'arête centrale (22) du poisson est soulevée du bord d'appui (21) du corps d'appui (13), avant le dégagement des arêtes dorsales, pour être centrée par la suite dans l'axe du bord d'appui (21).

12. Procédé selon la revendication 11, **caractérisé en ce que**, dans un premier temps et avant le dégagement des arêtes dorsales, les arêtes ventrales sont dégagées au moyen d'une seconde paire de lames rotatives (13, 19).

13. Procédé selon la revendication 11 ou la revendication 12, **caractérisé en ce que** l'arête centrale (22) est soulevée en dessous par des clapets de centrage (26, 27) avant d'être centrée, après son soulèvement, par les clapets de centrage (26, 27).

14. Procédé selon l'une des revendications 11 à 13, **caractérisé en ce que** l'arête centrale (22) est soulevée activement par des éléments de guidage (29, 30) et/ou par des rechaussements (33) associés aux éléments de guidage (29, 30).

15. Procédé selon l'une des revendications 11 à 14, **caractérisé en ce que** l'arête centrale (22) est soulevée activement par une bascule de guidage (39) alignée en amont de la paire de lames rotatives (18, 19) pour dégager les arêtes ventrales.

16. Procédé selon l'une des revendications 11 à 13, **caractérisé en ce que** l'arête centrale (22) est soulevée massivement en s'engageant dans des surfaces de guidage formées par des éléments de guidage (29, 30).
